# FASCICULE DE BREVET EUROPEEN

(11) **EP 3 028 331 B1**
(45) Date de publication et mention de la délivrance du brevet: **19.07.2017**
(21) Numéro de dépôt: 13756915.8
(22) Date de dépôt: 29.07.2013
(51) Int. Cl.: H01M 10/0565, H01M 14/00, B32B 17/10, C03C 17/34, G02B 27/01, G02B 5/30, H01M 8/1027, H01M 8/1037, H01M 8/1072, G02B 1/10

(54) **IONOGEL MONOLITHIQUE A MATRICE BIO-POLYMERIQUE, ET SON PROCEDE DE FABRICATION**
IONISCHES MONOLITHISCHES GEL BASIEREND AUF EINER BIOPOLYMERMATRIX UND DESSEN HERSTELLUNGSMETHODE
IONIC MONOLITHIC GEL BASED ON A BIOPOLYMERIC MATRIX AND ITS METHOD OF PRODUCTION

(43) Date de publication de la demande: 08.06.2016
(73) Titulaire: Hutchinson, 75008 Paris (FR); Centre National de la Recherche Scientifique (C.N.R.S.), 75016 Paris (FR); Université de Nantes, 44000 Nantes (FR)
(72) Inventeur: AYME-PERROT, David, F-68330 Huningue (FR); CERCLIER, Carole, F-44119 Grandchamp des Fontaines (FR); LE BIDEAU, Jean, F-44300 Nantes (FR); BUCHTOVA, Nela, F-49100 Angers (FR); GUYOMARD-LACK, Aurélie, F-49070 Saint Lambert la Potherie (FR); GIRARD, Philippe-Franck, F-78117 Chateaufort En Yvelines (FR)
(74) Mandataire: Cabinet Plasseraud
(86) Numéro de dépôt international: PCT/FR2013/051825
(87) Numéro de publication internationale: WO 2015/015059

(56) Documents cités:
- H. IZAWA ET AL.: "Unique gel of xanthan gum with ionic liquid and its conversion into high performance hydrogel", J. MATER. CHEM., vol. 19, 1 septembre 2009 (2009-09-01), pages 6969-6972, XP002714077,
- M. GERICKE ET AL.: "Ionic Liquids - Promising but Challenging Solvents for Homogeneous Derivatization of Cellulose", MOLECULES, vol. 17, 15 juin 2012 (2012-06-15), pages 7458-7502, XP002714078,
- TIM LIEBERT ET AL: "INTERACTION OF IONIC LIQUIDS WITH POLYSACCHARIDES. 5. SOLVENTS AND REACTION MEDIA FOR THE MODIFICATION OF CELLULOSE", BIORESOURCES, NORTH CAROLINA STATE UNIVERSITY * COLLEGE OF NATURAL RESOURCES, US, vol. 3, 1 janvier 2008 (2008-01-01), pages 576-601, XP002494019, ISSN: 1930-2126

## Description

La présente invention concerne un ionogel monolithique à matrice organique de type bio-polymérique (i.e. un ionogel « biosourcé ») confinant au moins un liquide ionique, et un procédé de fabrication de cet ionogel incluant deux modes de mise en oeuvre conduisant à deux ionogels distincts. L'invention s'applique de manière générale à des dispositifs utilisant des gels conducteurs ioniques, monolithiques, flexibles (notamment pour des dispositifs de stockage d'énergie tels que des accumulateurs, des piles, des cellules photovoltaïques), des membranes pour séparer des gaz ou des liquides, des membranes d'électrodialyse, des capteurs et une phase stationnaire en analyse chromatographique, à titre exemplatif et nullement limitatif.

Il est connu de longue date de fabriquer des gels par un procédé sol-gel d'hydrolyse et de condensation qui, à partir d'un précurseur moléculaire (appelé solution « vraie »), conduit à la formation d'une solution colloïdale (appelé « sol ») puis, par connexion des particules colloïdales, à la formation d'un squelette solide continu nommé gel.

D'autre part, les liquides ioniques sont formés par l'association de cations et d'anions et sont à l'état liquide à température proche de la température ambiante. Ils présentent des propriétés remarquables, telles qu'une volatilité nulle, une conductibilité ionique élevée ainsi que des propriétés catalytiques.

Il est notamment connu de confiner un liquide ionique dans une matrice de confinement formant un squelette solide continu, pour obtenir un ionogel, i.e. un gel confinant un liquide ionique qui préserve sa conductivité ionique. Le liquide ionique ainsi confiné reste par définition contenu dans la matrice, sans en couler ni s'en évaporer.

De tels ionogels sont notamment présentés dans le document de Brevet WO-A1-2005/007746, qui enseigne de former un ionogel monolithique à matrice de confinement rigide de type minérale ou organominérale (i.e. essentiellement inorganique) par polycondensation d'un précurseur moléculaire sol-gel à groupe(s) hydrolysable(s), tel qu'un alkoxysilane, qui est préalablement mélangé au liquide ionique et qui forme cette matrice de confinement après polycondensation.

Le document de Brevet WO-A1-2010/092258 enseigne de fabriquer une électrode composite pour batterie au lithium, par coulage d'un ionogel sur une électrode composite poreuse, formant simultanément l'électrode composite imprégnée d'électrolyte et l'électrolyte séparateur à matrice rigide également minérale ou organominérale. Cet ionogel est obtenu par mélange d'un liquide ionique, d'un sel de lithium et de ce même précurseur sol-gel, tel qu'un alkoxysilane.

On a par ailleurs cherché dans le passé à synthétiser des ionogels à matrice de confinement bio-polymérique (i.e. à base d'un polymère organique issu de la biomasse, c'est-à-dire produit par un être vivant) tel qu'un polysaccharide, comme par exemple présenté dans l'article Interaction of lonic Liquids with Polysaccharides, 8 - Synthesis of Cellulose Sulfates Suitable for Polyelectrolyte Complex Formation ; Gericke, M., Liebert, T., Heinze, T. Macromol. Biosci. 2009, 9, 343-353. Un inconvénient majeur des ionogels obtenus dans cet article réside dans le fait qu'il s'agit exclusivement de gels physiques rigides (i.e. des gels à réticulation physique, i.e. à liaisons faibles qui sont réversibles et déformables sous contrainte en fonction des conditions physiques, telles que la température). Un autre inconvénient de ces ionogels connus à matrice bio-polymérique est que le liquide ionique confiné doit être hydrophile.

Un but de la présente invention est de proposer un ionogel à matrice bio-polymérique de confinement d'au moins un liquide ionique qui remédie notamment à ces inconvénients, et ce but est atteint en ce que la Demanderesse vient de découvrir que la réticulation chimique maîtrisée d'un polysaccharide par un agent de silanisation formant des ponts de réticulation siloxane Si-O-Si entre les chaînes polymériques du polysaccharide permet d'une manière surprenante d'obtenir un ionogel monolithique, souple, stable même à des températures de l'ordre de 200° C et avec de hautes performances.

Un ionogel monolithique selon l'invention comprend ainsi une matrice bio-polymérique de confinement à base d'au moins un polysaccharide réticulé et au moins un liquide ionique confiné dans un réseau formé par ladite matrice, et cet ionogel est caractérisé en ce que ledit au moins un polysaccharide présente des ponts de réticulation siloxane, l'ionogel étant un gel chimique apte à constituer à lui seul un électrolyte solide autosupporté (cette caractéristique autosupportée étant due à la nature monolithique de l'ionogel).

On notera que ce gel chimique selon l'invention (i.e. à réticulation chimique et à liaisons fortes lui conférant une stabilité et des performances durables même à des températures de l'ordre de 200° C) peut avantageusement être formé d'un film autosupporté présentant une épaisseur moyenne égale ou supérieure à 10 µm (de préférence comprise entre 15 µm et 200 µm), et une conductivité ionique à 25° C égale ou supérieure à 0,7 mS.cm⁻¹.

On notera également qu'un ionogel selon l'invention forme un réseau hôte réticulé par les ponts siloxane, et que l'ionogel présente une grande souplesse qui a été vérifiée par des essais manuels de flexion.

On notera en outre que ledit au moins un liquide ionique utilisable dans cet ionogel de l'invention peut être indifféremment de type hydrophile ou hydrophobe, contrairement à l'article précité.

Selon une autre caractéristique de l'invention, ladite matrice de confinement peut être dépourvue de tout précurseur moléculaire de type sol-gel dérivé du silane, tel qu'un alkoxysilane, contrairement aux ionogels des documents de Brevet précités.

A titre de polysaccharide, sont utilisables dans la présente invention tous les polysaccharides linéaires ou ramifiés connus, répondant notamment à la formule -[Cₓ(H₂O)_{y})]ₙ- où y est généralement égal à x - 1.

De préférence, ledit au moins un polysaccharide est un dérivé cellulosique choisi dans le groupe constitué par l'hydroxyéthyl cellulose, l'hydroxyéthyl méthylcellulose, l'hydroxypropyl cellulose, l'hydroxypropyl méthylcellulose, l'hydroxypropyloxyméthoxycellulose et leurs mélanges. En variante, des polysaccharides autres que des dérivés cellulosiques sont utilisables.

Egalement à titre préférentiel, ledit au moins un polysaccharide présente des groupements aptes à former lesdits ponts de réticulation siloxane, comme par exemple présenté dans le document de Brevet WO-A1-97/05911 et dans l'article Synthesis and General Properties of Silated-Hydroxypropyl Methylcellulose in Prospect of Biomedical Use ; Bourges, X. Weiss, P. Daculsi, G. Legeay, G. Adv. Colloid Interface Sci. 2002, 99, 215-228.

De préférence, ledit au moins un liquide ionique comprend :
- à titre de cation, un noyau qui comprend un atome d'azote et qui est choisi parmi les noyaux imidazolium, pyridinium, pyrrolidinium et pipéridinium, ce noyau étant de préférence substitué sur l'atome d'azote par un ou deux groupes alkyles de 1 à 8 atomes de carbone et sur les atomes de carbone par un ou plusieurs groupes alkyles de 1 à 30 atomes de carbone, et
- à titre d'anion, un halogénure, un anion perfluoré, un phosphonate, un dicyanamide ou un borate, ledit anion étant de préférence un bis(trifluorométhanesulfonyl)imide.

A titre encore plus préférentiel, ledit au moins un liquide ionique est choisi hydrophobe et comprend par exemple un cation à noyau pyrrolidinium et à anion bis(trifluorométhanesulfonyl)imide.

Selon une autre caractéristique générale de l'invention, ledit ionogel peut comprendre ledit au moins un polysaccharide préalablement silanisé par un agent de silanisation apte à former lesdits ponts de réticulation siloxane et de préférence choisi dans le groupe constitué par:
a) les composés de formule (I) 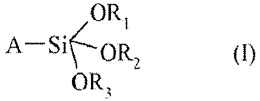 dans laquelle A représente un atome d'halogène, un groupe alkyle en C₁-C₂₀ substitué ou non par une fonction époxyde et R₁, R₂ et R₃ représentent chacun indépendamment l'un de l'autre un groupe alkyle en C₁-C₂₀ droit ou ramifié ou un métal alcalin,
b) les composés de formule (II) 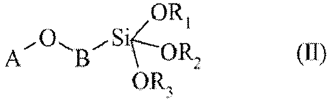 dans laquelle A représente un atome d'halogène ou un groupe alkyle en C₁-C₂₀ substitué ou non par une fonction époxyde, B représente un groupe alkyle en C₁-C₂₀ et R₁, R₂ et R₃ représentent chacun indépendamment l'un de l'autre un groupe alkyle en C₁-C₂₀ droit ou ramifié ou un métal alcalin,
c) les composés de formule (III) 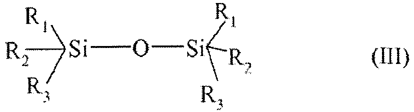 dans laquelle R₁, R₂, R₃ représentent chacun indépendamment l'un de l'autre un atome d'halogène ou un groupe alkyle en C₁-C₂₀ substitué on non par une fonction époxyde, et
d) le bis-glycidoxypropyltetraméthyldisilazane.

A titre encore plus préférentiel, ledit agent de silanisation est choisi parmi le (3-glycidoxypropyl)triméthoxysilane, le bis-glycidoxypropyltetraméthyldisilazane et le glycidoxypropyltriisopropoxysilane.

Avantageusement, ledit ionogel peut comprendre en outre des nanofibres inorganiques qui forment des liaisons covalentes avec lesdits ponts de réticulation siloxane et qui sont de préférence des nanofibres de silice majoritairement anisotropes et mésoporeuses pouvant présenter un facteur de forme proche de 10. Dans ce cas, ledit ionogel forme un nanocomposite qui peut avantageusement présenter une conductivité ionique à 25° C comprise entre 1,5 mS.cm⁻¹ et 5 mS.cm⁻¹.

De manière générale, un procédé selon l'invention de fabrication d'un ionogel tel que défini ci-dessus comprend essentiellement une silanisation dudit au moins un polysaccharide en solution aqueuse basique par un agent de silanisation, et une polycondensation du polysaccharide silanisé.

De préférence, ledit au moins un liquide ionique est hydrophobe, ledit agent de silanisation étant tel que défini ci-dessus.

Plus précisément, un ionogel selon l'invention peut être fabriqué selon deux procédés distincts, conformément aux deux modes de réalisation présentés ci-après.

Selon un premier mode de réalisation de l'invention, ce procédé comprend:
- la préparation d'un hydrogel à base dudit au moins un polysaccharide silanisé et réticulé par voie sol-gel par polycondensation en milieu aqueux (étant précisé que dans l'hydrogel, le polysaccharide confine de l'eau), puis
- des réactions successives d'échange de solvants d'hydrophobicités croissantes.

On notera que l'hydrogel peut être coulé ou enduit sur un support sous forme d'un film mince, avec des épaisseurs variables pour le film pouvant être supérieures ou égales à 100 µm (de tels hydrogels sont notamment présentés dans le document de brevet précité WO-A1-97/05911 qui enseigne de former un hydrogel à matrice de confinement de type polysaccharide silanisé par polycondensation).

Lesdites réactions d'échange de solvants d'hydrophobicités croissantes peuvent comprendre :
- un premier échange de solvants échangeant un solvant aqueux contenant ledit au moins un polysaccharide silanisé et réticulé par voie sol-gel, par un premier solvant non aqueux à base d'un liquide ionique hydrophile, par exemple le 1,3-diméthylimidazolium méthylphosphonate,
- au moins un échange intermédiaire de solvants échangeant ledit premier solvant non aqueux par un solvant intermédiaire non aqueux moins hydrophile, par exemple à base d'acétonitrile, et
- un dernier échange de solvants échangeant ledit solvant intermédiaire non aqueux par ledit au moins un liquide ionique hydrophobe.

Selon un second mode préférentiel de réalisation de l'invention qui présente notamment l'avantage d'impliquer un temps de préparation plus court et une fraction massique supérieure de liquide ionique confiné en comparaison dudit premier mode, le procédé comprend un mélangeage direct d'une première solution comprenant ledit au moins un liquide ionique en milieu acide et d'une seconde solution à base dudit au moins un polysaccharide silanisé et non réticulé en milieu basique aqueux, de manière que la réticulation dudit au moins un polysaccharide via lesdits ponts siloxane ait lieu par ce mélangeage via la polycondensation du polysaccharide en milieu liquide ionique.

Avantageusement, ces deux modes de réalisation peuvent comprendre en outre l'ajout de nanofibres inorganiques, de préférence des nanofibres de silice majoritairement anisotropes et mésoporeuses pouvant présenter un facteur de forme proche de 10, qui forment des liaisons covalentes avec lesdits ponts de réticulation siloxane dudit au moins un polysaccharide, pour que l'ionogel présente une conductivité ionique à 25° C comprise entre 1,5 mS.cm⁻¹ et 5 mS.cm⁻¹.

D'autres caractéristiques, avantages et détails de la présente invention ressortiront à la lecture de la description suivante de plusieurs exemples de réalisation de l'invention, donnés à titre illustratif et non limitatif.

### Exemples de préparation d'ionogels selon le premier mode de réalisation de l'invention :

On a réticulé par voie chimique de l'hydroxypropyl méthylcellulose (produite par la société Colorcon sous le nom Methocel E4M, et de viscosité égale à 4000 cP à 25° C avec une fraction massique de 2 % dans de l'eau) préalablement silanisée au moyen d'un agent de silanisation constitué de (3-glycidoxypropyl)triméthoxysilane (en abrégé « GPTMS », produit par la société Sigma-Aldrich) selon le protocole décrit dans le document de Brevet précité WO-A1-97/05911. Le produit HPMC silanisé et réticulé obtenu constitue l'hydrogel de départ (appelé H1 ci-après) destiné à former la matrice de confinement.

On a ajouté à l'hydrogel H1 de départ (contenant 2 % en poids du HPMC silanisé et réticulé par des ponts Si-O-Si et 98 % d'une solution aqueuse), lors de sa préparation, des nanofibres de silice anisotropes et mésoporeuses présentant un facteur de forme proche de 10, selon deux fractions massiques de ces nanofibres égales à 1 % et à 4 % pour l'obtention de deux autres hydrogels de départ H2 et H3, respectivement.

On a ensuite soumis chaque hydrogel H1, H2, H3 à un même procédé d'échange de solvants comprenant les étapes suivantes :
a) on a échangé la solution aqueuse de H1, H2, H3 contre un liquide ionique hydrophile constitué de 1,3-diméthylimidazolium méthylphosphonate (en abrégé MMlm MePhos) par immersion de H1, H2, H3 dans deux bains successifs de ce liquide ionique pendant 24 heures, respectivement pour l'obtention d'ionogels intermédiaires I1, I2, I3 ;
b) après un séchage de 24 heures à 50° C sous atmosphère ambiante, on a échangé ce liquide ionique MMlm MePhos contre de l'acétonitrile en plaçant ces ionogels intermédiaires I1, I2, I3 dans un appareillage Soxhlet pendant 24 heures ; puis
c) immédiatement après cet échange, on a placé les échantillons obtenus pendant 24 heures dans deux bains successifs contenant un liquide ionique hydrophobe, puis on les a séchés pendant 24 heures à 50° C sous atmosphère ambiante, pour l'obtention de trois ionogels finaux I1', I2', I3' selon l'invention.

On a utilisé à titre de liquide ionique hydrophobe à confiner le N-propyl-N-méthylpyrrolidinium bis(trifluorométhanesulfonyl)imide (en abrégé Pyr13 TFSI).

Ces ionogels hydrophobes I1', I2', 13' de l'invention (issus des hydrogels H1, H2, H3 comprenant respectivement des fractions massiques de nanofibres de silice de 0 %, 1% et 4 %) présentaient tous trois une structure autosupportée, homogène et souple (la souplesse ayant été caractérisée par des tests de flexion manuelle). Le tableau 1 ci-après détaille à chaque stade du procédé d'échange de solvants les fractions massiques des quatre liquides (i.e. eau, MMIm MePhos, acétonitrile et Pyr13 TFSI) dans la totalité matrice + liquide ayant conduit aux ionogels I1', I2', I3', et la perte de volume totale entre chaque ionogel I1', I2', I3' et chaque hydrogel initial H1, H2, H3.

**Tableau 1 :**

| Echantillons | eau | MMIm MePhos | acétonitrile | Pyr13 TFSI | Perte de volume |
|---|---|---|---|---|---|
| H1, I1, I1' | 98 % | 95 % | 83 % | 69 % | 95 % |
| H2, I2, I2' | 98 % | 95 % | 85 % | 83 % | 93 % |
| H3, I3, I3' | 98 % | 94 % | 85 % | 90 % | 30 % |

Ces résultats montrent que la perte de volume est minimisée par l'ajout des nanofibres de silice, qui interagissent par greffage avec les ponts de réticulation Si-O-Si. De plus, la fraction massique du Pyr13 TFSI dans l'ionogel I1' dépourvu de nanofibres (69 %) est moindre que la même fraction massique dans les ionogels I2', I3' contenant ces nanofibres (cette fraction de Pyr13 TFSI est maximale dans l'ionogel I3' contenant le plus de nanofibres), ce qui montre la bonne affinité des nanofibres avec un liquide ionique hydrophobe tel que le Pyr13 TFSI.

De plus, des analyses « FTIR » de spectroscopie infrarouge à transformée de Fourier (« Fourier Transform Infrared Spectroscopy ») donnant les spectres respectifs de MMIm MePhos, de Pyr13 TFSI et des ionogels I1', I2', I3' ont montré que ces derniers contiennent à l'intérieur de leur matrice le liquide ionique hydrophobe Pyr13 TFSI à l'état pur. En d'autres termes, l'échange de solvant a été total pour aboutir aux ionogels I1', I2', I3'.

On a par ailleurs réalisé des analyses de thermogravimétrie (ATG) consistant à mesurer en fonction de la température la perte de masse des échantillons d'ionogels I1', I2', I3', du bio-polymère HPMC silanisé et de l'hydrogel H1 de départ. Ces analyses ATG ont montré que la dégradation du seul polymère HPMC silanisé a lieu à une température de 210° C, alors que cette dégradation se produit à une température plus élevée (240° C) à l'état réticulé dans l'hydrogel H1. Suite à l'échange d'eau par le liquide ionique Pyr13 TFSI, on améliore la stabilité thermique de l'HPMC silanisé et réticulé dans l'ionogel, qui reste stable jusqu'à 260° C, le seuil de dégradation (au-dessus de 400° C) de ce liquide ionique une fois confiné étant conservé.

Le tableau 2 ci-après donne les conductivités ioniques mesurées à 20° C par Spectroscopie d'Impédance Complexe pour les trois ionogels I1', I2', I3' de l'invention, en comparaison de celle du liquide ionique Pyr13 TFSI (suite à un séchage sous vide à 50° C pendant 24 heures).

**Tableau 2 :**

| | Pyr13 TFSI | I1' | I2' | I3' |
|---|---|---|---|---|
| σ (mS.cm⁻¹) | 2,8 | 0,7 | 1,5 | 4,5 |

Ces résultats montrent que la conductivité ionique de 0,7 mS.cm⁻¹ qui caractérise l'ionogel I1' dépourvu de nanofibres de silice est comparable ou même supérieure aux conductivités ioniques d'ionogels connus à base de polysaccharides. De plus, l'ajout de ces nanofibres de silice permet d'augmenter considérablement cette conductivité, comme le montre notamment la conductivité ionique de 4,5 mS.cm⁻¹ qui est obtenue avec 4 % de ces nanofibres et qui est supérieure à celle du liquide ionique non confiné, même à des températures supérieures à 20° C atteignant 90° C.

### Exemples de préparation d'ionogels selon le second mode de réalisation de l'invention :

On a silanisé par voie chimique la même hydroxypropyl méthylcellulose que pour le premier mode précité au moyen du même agent de silanisation « GPTMS », et l'on a utilisé à titre de liquide ionique à confiner le même liquide que pour ce premier mode (Pyr13 TFSI).

On a tout d'abord préparé des solutions 1 et 2 comme suit :
- solutions 1 : on a mélangé différentes quantités de nanofibres de silice variant de 0 à 80 mg (identiques à celles du premier mode) à 1 mL d'acétonitrile et à 1,7 mL d'acide formique, puis on a placé la solution obtenue dans un bain à ultrasons pendant 1 heure. On y a ensuite ajouté le liquide ionique Pyr13 TFSI suivant différentes quantités variant de 0,47 g à 1 g, pour l'obtention d'une série de différentes solutions 1 ;
- solution 2 : on a préparé cette unique solution 2 formant le gel en introduisant 3 g du polymère HPMC silanisé et non réticulé dans un flacon fermé contenant 97 mL de solution aqueuse de NaOH (0,2 mol.L⁻¹), et en procédant à une agitation pendant 48 heures à température ambiante. On a ensuite procédé à une dialyse de la solution obtenue à température ambiante, une première fois contre 1,9 L de solution de soude (0,09 mol.L⁻¹) pendant 20 heures, puis une seconde fois contre 2 L de cette solution de soude (0,09 mol.L⁻¹) pendant 1 heure et 30 minutes.

On a ensuite procédé à un mélangeage de chaque solution 1 avec 0,5 mL de la solution 2 par échange de seringues, mélangeage qui a eu pour effet de réticuler le HPMC silanisé.

On a façonné chaque mélange ainsi obtenu soit par coulage dans un moule, soit par enduction à une épaisseur de 200 µm sur un substrat de dépôt de type lame de verre ou feuille de PET (par exemple du Mylar®).

On a procédé à la gélification de chaque mélange, puis à une évaporation des solvants pendant une durée allant de 1 jour à 3 jours.

Que les ionogels ainsi obtenus soient coulés ou enduits, leur conductivité ionique (mesurée à 25° C par spectroscopie d'impédance) était de l'ordre de 0,8 mS.cm⁻¹ à 5,0 mS.cm⁻¹, à l'instar des conductivités relativement élevées obtenus par le premier mode précité.

Dans le cas préférentiel des ionogels coulés dans un moule, ceux-ci présentaient des épaisseurs moyennes, mesurées à l'aide d'un dispositif « Palmer » pour cette gamme d'épaisseurs, comprises entre 100 µm et 900 µm.

Dans le cas d'ionogels déposés en films minces, ceux-ci présentaient des épaisseurs variables, mesurées par profilométrie mécanique pour cette gamme d'épaisseurs, comprises entre 10 µm et 100 µm.

## Revendications

1. Ionogel monolithique comprenant une matrice bio-polymérique de confinement à base d'au moins un polysaccharide réticulé et au moins un liquide ionique confiné dans un réseau formé par ladite matrice, **caractérisé en ce que** ledit au moins un polysaccharide présente des ponts de réticulation siloxane, l'ionogel étant un gel chimique apte à constituer à lui seul un électrolyte solide autosupporté.

2. Ionogel selon la revendication 1, **caractérisé en ce que** ledit ionogel présente une épaisseur moyenne égale ou supérieure à 10 µm et une conductivité ionique à 25° C égale ou supérieure à 0,7 mS.cm⁻¹.

3. Ionogel selon la revendication 1 ou 2, **caractérisé en ce que** ladite matrice de confinement est dépourvue de tout précurseur moléculaire de type sol-gel dérivé du silane, tel qu'un alkoxysilane.

4. Ionogel selon une des revendications précédentes, **caractérisé en ce que** ledit au moins un polysaccharide est un dérivé cellulosique de préférence choisi dans le groupe constitué par l'hydroxyéthyl cellulose, l'hydroxyéthyl méthylcellulose, l'hydroxypropyl cellulose, l'hydroxypropyl méthylcellulose, l'hydroxypropyloxyméthoxycellulose et leurs mélanges.

5. Ionogel selon une des revendications précédentes, **caractérisé en ce que** ledit au moins un liquide ionique comprend :
- à titre de cation, un noyau qui comprend un atome d'azote et qui est choisi parmi les noyaux imidazolium, pyridinium, pyrrolidinium et pipéridinium, ce noyau étant de préférence substitué sur l'atome d'azote par un ou deux groupes alkyles de 1 à 8 atomes de carbone et sur les atomes de carbone par un ou plusieurs groupes alkyles de 1 à 30 atomes de carbone, et
- à titre d'anion, un halogénure, un anion perfluoré, un phosphonate, un dicyanamide ou un borate, ledit anion étant de préférence un bis(trifluorométhanesulfonyl)imide.

6. Ionogel selon une des revendications précédentes, **caractérisé en ce que** ledit au moins un liquide ionique est hydrophobe.

7. Ionogel selon une des revendications précédentes, **caractérisé en ce que** ledit ionogel comprend ledit au moins un polysaccharide préalablement silanisé par un agent de silanisation qui est apte à former lesdits ponts de réticulation siloxane et qui est de préférence choisi dans le groupe constitué par:
a) les composés de formule (I) 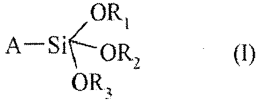 dans laquelle A représente un atome d'halogène, un groupe alkyle en C₁-C₂₀ substitué ou non par une fonction époxyde et R₁, R₂ et R₃ représentent chacun indépendamment l'un de l'autre un groupe alkyle en C₁-C₂₀ droit ou ramifié ou un métal alcalin,
b) les composés de formule (II) 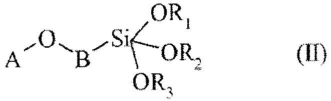 dans laquelle A représente un atome d'halogène ou un groupe alkyle en C₁-C₂₀ substitué ou non par une fonction époxyde, B représente un groupe alkyle en C₁-C₂₀ et R₁, R₂ et R₃ représentent chacun indépendamment l'un de l'autre un groupe alkyle en C₁-C₂₀ droit ou ramifié ou un métal alcalin,
c) les composés de formule (III) 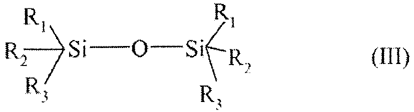 dans laquelle R₁, R₂, R₃ représentent chacun indépendamment l'un de l'autre un atome d'halogène ou un groupe alkyle en C₁-C₂₀ substitué on non par une fonction époxyde, et
d) le bis-glycidoxypropyltetraméthyldisilazane.

8. Ionogel selon une des revendications précédentes, **caractérisé en ce que** ledit ionogel comprend en outre des nanofibres inorganiques qui forment des liaisons covalentes avec lesdits ponts de réticulation siloxane et qui sont de préférence des nanofibres de silice majoritairement anisotropes et mésoporeuses.

9. Ionogel selon la revendication 8, **caractérisé en ce que** ledit ionogel présente une conductivité ionique à 25° C comprise entre 1,5 mS.cm⁻¹ et 5 mS.cm⁻¹.

10. Procédé de fabrication d'un ionogel selon une des revendications 1 à 9, **caractérisé en ce qu'**il comprend essentiellement une silanisation dudit au moins un polysaccharide en solution aqueuse basique par un agent de silanisation, et une polycondensation du polysaccharide silanisé.

11. Procédé selon la revendication 10, **caractérisé en ce qu'**il comprend la préparation d'un hydrogel à base dudit au moins un polysaccharide silanisé et réticulé par voie sol-gel par polycondensation en milieu aqueux, puis des réactions successives d'échange de solvants d'hydrophobicités croissantes, comprenant :
- un premier échange de solvants échangeant un solvant aqueux contenant ledit au moins un polysaccharide silanisé et réticulé par voie sol-gel, par un premier solvant non aqueux à base d'un liquide ionique hydrophile, par exemple le 1,3-diméthylimidazolium méthylphosphonate,
- au moins un échange intermédiaire de solvants échangeant ledit premier solvant non aqueux par un solvant intermédiaire non aqueux moins hydrophile, par exemple à base d'acétonitrile, et
- un dernier échange de solvants échangeant ledit solvant intermédiaire non aqueux par ledit au moins un liquide ionique hydrophobe.

12. Procédé selon la revendication 10, **caractérisé en ce qu'**il comprend un mélangeage direct d'une première solution comprenant ledit au moins un liquide ionique en milieu acide et d'une seconde solution contenant ledit au moins un polysaccharide silanisé et non réticulé en milieu basique aqueux, de manière que la réticulation dudit au moins un polysaccharide via lesdits ponts siloxane ait lieu par ce mélangeage via la polycondensation du polysaccharide en milieu liquide ionique.

13. Procédé selon une des revendications 10 à 12, **caractérisé en ce qu'**il comprend en outre l'ajout de nanofibres inorganiques, de préférence des nanofibres de silice majoritairement anisotropes et mésoporeuses, qui forment des liaisons covalentes avec lesdits ponts de réticulation siloxane dudit au moins un polysaccharide, pour que ledit ionogel présente une conductivité ionique à 25° C comprise entre 1,5 mS.cm⁻¹ et 5 mS.cm⁻¹.

## Patentansprüche

1. Ionisches monolithisches Gel, umfassend eine Biopolymer-Begrenzungsmatrix auf der Basis wenigstens eines vernetzten Polysaccharids und wenigstens einer in einem von der Matrix gebildeten Netz begrenzten ionischen Flüssigkeit, **dadurch gekennzeichnet, dass** das wenigstens eine Polysaccharid Siloxan-Vernetzungsbrücken umfasst, wobei das ionische Gel ein chemisches Gel ist, welches allein einen selbsttragenden festen Elektrolyt bilden kann.

2. Ionisches Gel nach Anspruch 1, **dadurch gekennzeichnet, dass** das ionische Gel eine mittlere Dicke größer gleich 10 µm und bei 25 °C eine Ionenleitfähigkeit größer gleich 0,7 mS.cm⁻¹ aufweist.

3. Ionisches Gel nach Anspruch 1 oder 2, **dadurch gekennzeichnet, dass** die Begrenzungsmatrix frei von jeglicher molekularen Vorstufe vom Typ Sol-Gel-Silanderivat ist, wie beispielsweise Alkoxysilan.

4. Ionisches Gel nach einem der vorhergehenden Ansprüche, **dadurch gekennzeichnet, dass** das wenigstens eine Polysaccharid ein Cellulosederivat ist, vorzugsweise gewählt aus der Gruppe, umfassend Hydroxyethyl-Cellulose, Hydroxyethyl-Methylcellulose, Hydroxypropyl-Cellulose, HydroxypropylMethylcellulose, Hydroxypropyloxymethoxycellulose und deren Mischungen.

5. Ionisches Gel nach einem der vorhergehenden Ansprüche, **dadurch gekennzeichnet, dass** die wenigstens eine ionische Flüssigkeit umfasst:
- als Kation einen Kern, welcher ein Stickstoffatom umfasst und gewählt ist aus den folgenden Kernen: Imidazolium, Pyridinium, Pyrrolidinium und Piperidinium, wobei der Kern vorzugsweise am N-Atom mit einer oder zwei Alkylgruppen mit 1 bis 8 Kohlenstoffatomen substituiert ist und an den Kohlenstoffatomen mit einer oder mehreren Alkylgruppen mit 1 bis 30 Kohlenstoffatomen, und
- als Anion ein Halogenid, ein perfluoriertes Anion, ein Phosphonat, ein Dicyanamid oder ein Borat, wobei das Anion vorzugsweise ein Bis(trifluormethansulfonyl)imid ist.

6. Ionisches Gel nach einem der vorhergehenden Ansprüche, **dadurch gekennzeichnet, dass** die wenigstens eine ionische Flüssigkeit hydrophob ist.

7. Ionisches Gel nach einem der vorhergehenden Ansprüche, **dadurch gekennzeichnet, dass** das ionische Gel das wenigstens eine Polysaccharid umfasst, welches zuvor durch ein Silanisierungsmittel silanisiert wurde, das in der Lage ist, die Siloxan-Vernetzungsbrücken zu bilden und das vorzugsweise gewählt ist aus der Gruppe, umfassend:
a) Zusammensetzungen nach Formel (I) 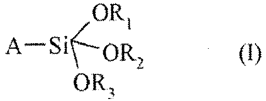 wobei A für ein Halogenatom steht oder eine mit einer Epoxidfunktion substituierte oder nicht substituierte C₁-C₂₀-Alkylgruppe, und wobei R₁, R₂ und R₃ unabhängig voneinander für eine gerade oder verzweigte C₁-C₂₀-Alkylgruppe oder ein Alkalimetall stehen,
b) Zusammensetzungen nach Formel (II) 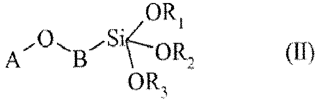 wobei A für ein Halogenatom steht oder eine mit einer Epoxidfunktion substituierte oder nicht substituierte C₁-C₂₀-Alkylgruppe, wobei B für eine C₁-C₂₀-Alkylgruppe steht und wobei R₁, R₂ und R₃ unabhängig voneinander für eine gerade oder verzweigte C₁-C₂₀-Alkylgruppe oder ein Alkalimetall stehen,
c) Zusammensetzungen nach Formel (III) 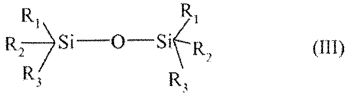 wobei R₁, R₂, R₃ unabhängig voneinander für ein Halogenatom oder eine mit einer Epoxidfunktion substituierten oder nicht substituierten C₁-C₂₀-Alkylgruppe stehen, und
d) Bis-Glycidoxypropyltetramethyldisalazan.

8. Ionisches Gel nach einem der vorhergehenden Ansprüche, **dadurch gekennzeichnet, dass** das ionische Gel ferner inorganische Nanofasern umfasst, welche kovalente Bindungen mit den Siloxan-Vernetzungsbrücken bilden und welche vorzugsweise überwiegend anisotrope und mesoporöse Silizium-Nanofasern sind.

9. Ionisches Gel nach Anspruch 8, **dadurch gekennzeichnet, dass** das ionische Gel bei 25 °C eine Ionenleitfähigkeit zwischen 1,5 mS.cm⁻¹ und 5 mS.cm⁻¹ aufweist.

10. Herstellungsverfahren für ein ionisches Gel nach einem der Ansprüche 1 bis 9, **dadurch gekennzeichnet, dass** es im Wesentlichen eine Silanisierung des wenigstens einen Polysaccharids in basischer wässriger Lösung durch ein Silanisierungsmittel umfasst, sowie eine Polykondensation des silanisierten Polysaccharids.

11. Verfahren nach Anspruch 10, **dadurch gekennzeichnet, dass** es die Zubereitung eine Hydrogels auf der Basis des wenigstens einen mit einem Sol-Gel-Verfahren durch Polykondensation in wässrigem Milieu silanisierten und vernetzten Polysaccharids umfasst, sowie aufeinander folgende Austauschreaktionen von Lösungsmitteln mit steigender Hydrophobizität, umfassend:
- einen ersten Lösungsmittelaustausch mit dem Austausch eines wässrigen Lösungsmittels, welches das wenigstens eine mit einem Sol-Gel-Verfahren silanisierte und vernetzte Polysaccharid umfasst, durch ein erstes nicht wässriges Lösungsmittel auf der Basis einer hydrophilen ionischen Flüssigkeit, beispielsweise 1,3-Dimethylimidazolium-methylphosphonat,
- wenigstens einen Lösungsmittel-Zwischenaustausch, wobei das erste nicht wässrige Lösungsmittel durch ein nicht wässriges, weniger hydrophiles Zwischenlösungsmittel ersetzt wird, beispielsweise basierend auf Acetonitril, und
- einen letzten Lösungsmittelaustausch, wobei das nicht wässrige Zwischenlösungsmittel durch die wenigstens eine hydrophobe ionische Flüssigkeit ersetzt wird.

12. Verfahren nach Anspruch 10, **dadurch gekennzeichnet, dass** es ein direktes Vermischen einer ersten Lösung umfasst, welche die wenigstens eine ionische Flüssigkeit in saurem Milieu umfasst, und einer zweiten Lösung, welche das wenigstens eine silanisierte und nicht vernetzte Polysaccharid in wässrigem basischem Milieu umfasst, so dass die Vernetzung des wenigstens einen Polysaccharids über die Siloxanbrücken durch dieses Vermischen über die Polykondensation des Polysaccharids in ionischem flüssigen Milieu stattfindet.

13. Verfahren nach einem der Ansprüche 10 bis 12, **dadurch gekennzeichnet, dass** es ferner das Hinzufügen von inorganischen Nanofasern umfasst, vorzugsweise von überwiegend anisotropen und mesoporösen Silizium-Nanofasern, welche kovalente Bindungen mit den Siloxan-Vernetzungsbrücken des wenigstens einen Polysaccharids bilden, damit das ionische Gel bei 25 °C eine ionische Leitfähigkeit zwischen 1,5 mS.cm⁻¹ und 5 mS.cm⁻¹ aufweist.

## Claims

1. A monolithic ionogel comprising a biopolymer confinement matrix based on at least one crosslinked polysaccharide and at least one ionic liquid confined in a network formed by said matrix, **characterized in that** said at least one polysaccharide has siloxane crosslinking bridges, the ionogel being a chemical gel capable of constituting a self-supported solid electrolyte by itself.

2. The ionogel as claimed in claim 1, **characterized in that** said ionogel has an average thickness greater than or equal to 10 µm and an ionic conductivity at 25°C greater than or equal to 0.7 mS.cm⁻¹.

3. The ionogel as claimed in claim 1 or 2, **characterized in that** said confinement matrix is devoid of any molecular precursor of sol-gel type derived from silane, such as an alkoxysilane.

4. The ionogel as claimed in one of the preceding claims, **characterized in that** said at least one polysaccharide is a cellulose-based derivative preferably chosen from the group consisting of hydroxyethylcellulose, hydroxyethylmethylcellulose, hydroxypropylcellulose, hydroxypropylmethylcellulose, hydroxypropyloxymethoxycellulose and mixtures thereof.

5. The ionogel as claimed in one of the preceding claims, **characterized in that** said at least one ionic liquid comprises:
- by way of cation, a nucleus which comprises a nitrogen atom and which is chosen from imidazolium, pyridinium, pyrrolidinium and piperidinium nuclei, this nucleus preferably being substituted on the nitrogen atom with one or two alkyl groups having from 1 to 8 carbon atoms and on the carbon atoms with one or more alkyl groups having from 1 to 30 carbon atoms, and
- by way of anion, a halide, a perfluoro anion, a phosphonate, a dicyanamide or a borate, said anion preferably being a bis(trifluoromethanesulfonyl)imide.

6. The ionogel as claimed in one of the preceding claims, **characterized in that** said at least one ionic liquid is hydrophobic.

7. The ionogel as claimed in one of the preceding claims, **characterized in that** said ionogel comprises said at least one polysaccharide presilanized with a silanizing agent which is capable of forming said siloxane crosslinking bridges and which is preferably chosen from the group consisting of:
a) the compounds of formula (I) 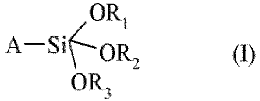 in which A represents a halogen atom or a C₁-C₂₀ alkyl group optionally substituted with an epoxide function, and R₁, R₂ and R₃ each represent, independently of one another, a straight or branched C₁-C₂₀ alkyl group or an alkali metal,
b) the compounds of formula (II) 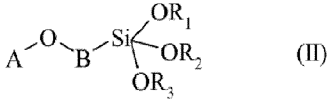 in which A represents a halogen atom or a C₁-C₂₀ alkyl group optionally substituted with an epoxide function, B represents a C₁-C₂₀ alkyl group, and R₁, R₂ and R₃ each represent, independently of one another, a straight or branched C₁-C₂₀ alkyl group or an alkali metal,
c) the compounds of formula (III) 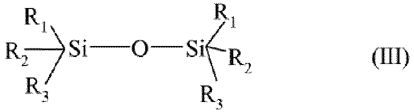 in which R₁, R₂ and R₃ each represent, independently of one another, a halogen atom or a C₁-C₂₀ alkyl group optionally substituted with an epoxide function, and
d) bisglycidoxypropyltetramethyldisilazane.

8. The ionogel as claimed in one of the preceding claims, **characterized in that** said ionogel also comprises inorganic nanofibers which form covalent bonds with said siloxane crosslinking bridges and which are preferably silica nanofibers which are predominantly anisotropic and mesoporous.

9. The ionogel as claimed in claim 8, **characterized in that** said ionogel has an ionic conductivity at 25°C of between 1.5 mS.cm⁻¹ and 5 mS.cm⁻¹.

10. A process for manufacturing an ionogel as claimed in one of claims 1 to 9, **characterized in that** it essentially comprises silanization of said at least one polysaccharide in a basic aqueous solution with a silanizing agent, and polycondensation of the silanized polysaccharide.

11. The process as claimed in claim 10, **characterized in that** it comprises the preparation of a hydrogel based on said at least one polysaccharide that is silanized and crosslinked by the sol-gel route, by polycondensation in an aqueous medium, then successive reactions in which solvents of increasing hydrophobicities are exchanged, comprising:
- a first exchange of solvents exchanging an aqueous solvent containing said at least one polysaccharide that is silanized and crosslinked via the sol-gel route with a nonaqueous first solvent based on a hydrophilic ionic liquid, for example 1,3-dimethylimidazolium methylphosphonate,
- at least one intermediate exchange of solvents exchanging said nonaqueous first solvent with a less hydrophilic nonaqueous intermediate solvent, for example based on acetonitrile, and
- a final exchange of solvents exchanging said nonaqueous intermediate solvent with said at least one hydrophobic ionic liquid.

12. The process as claimed in claim 10, **characterized in that** it comprises direct mixing of a first solution comprising said at least one ionic liquid in an acid medium and of a second solution containing said at least one silanized and noncrosslinked polysaccharide in an aqueous basic medium, such that the crosslinking of said at least one polysaccharide via said siloxane bridges takes place by means of this mixing via the polycondensation of the polysaccharide in an ionic liquid medium.

13. The process as claimed in one of claims 10 to 12, **characterized in that** it also comprises the addition of inorganic nanofibers, preferably silica nanofibers which are predominantly anisotropic and mesoporous, which form covalent bonds with said siloxane crosslinking bridges of said at least one polysaccharide, so that said ionogel has an ionic conductivity at 25°C of between 1.5 mS.cm⁻¹ and 5 mS.cm⁻¹.
